# EUROPÄISCHE PATENTSCHRIFT

(11) **EP 1 129 928 B1**
(45) Veröffentlichungstag und Bekanntmachung des Hinweises auf die Patenterteilung: **07.05.2003**
(21) Anmeldenummer: 01102764.6
(22) Anmeldetag: 08.02.2001
(51) Int. Cl.: B62D 25/16, B60R 21/34

(54) **Kotflügelanordnung für ein Kraftfahrzeug**
Mudguard for a motor vehicle
Garde-boue pour un véhicule automobile

(30) Priorität: 29.02.2000 DE 10009364
(43) Veröffentlichungstag der Anmeldung: 05.09.2001
(73) Patentinhaber: Volkswagen Aktiengesellschaft, 38436 Wolfsburg (DE)
(72) Erfinder: Gödecke, Ralf, 29386 Hankensbüttel (DE); Weber, Pia, 38118 Braunschweig (DE); Schinke, Stefan, 38102 Braunschweig (DE); Fehr, Hans-Uwe, Dipl.-Ing., 38116 Braunschweig (DE); Stein, Jürgen, 38102 Braunschweig (DE); Ehlers, Thomas, 38444 Wolfsburg (DE); Strube, Christian, 38104 Braunschweig (DE); Lange, Sven, 38551 Ribbesbüttel (DE)

(56) Entgegenhaltungen:
- DE-A- 2 934 060
- PATENT ABSTRACTS OF JAPAN vol. 2000, no. 02, 29. Februar 2000 (2000-02-29) -& JP 11 321717 A (HONDA MOTOR CO LTD), 24. November 1999 (1999-11-24)
- PATENT ABSTRACTS OF JAPAN vol. 1995, no. 03, 28. April 1995 (1995-04-28) -& JP 06 336179 A (MITSUBISHI MOTORS CORP), 6. Dezember 1994 (1994-12-06)

## Beschreibung

Die Erfindung bezieht sich auf eine Kotflügelanordnung für ein Kraftfahrzeug und deren sicherheitstechnische Ausgestaltung im Hinblick auf einen Zusammenprall des Kraftfahrzeuges mit einer Person, um die Verletzungsgefahr für die Person zu vermindern. Im besonderen bezieht sich die Erfindung auf eine Kotflügelanordnung für ein Kraftfahrzeug, umfassend einen Kotflügel und ein Deformationselement mit einem C-förmigen Profilquerschnitt zur im wesentlichen vertikal gerichteten Abstützung einer Oberkante des Kotflügels gegen einen Fahrzeugaufbau, wobei ein Schenkel des C-Profils im Bereich der Oberkante mit dem Kotflügel und der andere Schenkel mit dem Fahrzeugaufbau verbunden ist.

Bei einem Zusammenprall mit einem Fußgänger wird dieser in einer ersten Phase in der Regel durch die Stoßstange des Fahrzeuges erfaßt und in einer zweiten Phase auf die Fronthaube des Fahrzeuges geschleudert, wobei der Aufprall dann zuerst mit dem Kopf oder dem Oberkörper erfolgt. Der Aufprall auf die breitflächige Fronthaube ist hierbei weniger kritisch. Die größten Risiken für die Verletzungsgefahr resultieren vielmehr aus den verhältnismäßig starren Seitenkanten der Fronthaube sowie insbesondere den Oberkanten der Kotflügel im Bereich der Trennfuge zu der Fronthaube. Gerade die Oberkanten der Kotflügel weisen eine besonders hohe Steifigkeit auf, da der Kotflügel im Bereich der Oberkante nach innen umgebogen ist, um sich mit einem Befestigungsabschnitt gegen die Fahrzeugkarosserie abzustützen. Schon aus der umgebogenen Oberkante ergibt sich eine deutliche Steifigkeitszunahme, die durch einen zumeist im wesentlichen vertikal ausgebildeten Stützabschnitt zwischen der Oberkante und dem Fahrzeugaufbau weiter verstärkt wird. Tritt der Aufprall im Bereich der Oberkante auf, so ist die Verletzungsgefahr bzw. die Schwere der Verletzungen besonders hoch.

Aus diesem Grunde wird versucht, die strukturelle Steifigkeit der Oberkante zu vermindern. Dabei ist jedoch zu beachten, daß an dem Kotflügel eine die Integrität des Fahrzeugaufbaus nicht gefährdende Festigkeit der Verbindung zu der Karosserie erhalten bleiben muß, die zudem eine vibrationsfreie Anbindung sicherstellt. Da die Anbindung des Kotflügels an dem Fahrzeugaufbau über die Oberkante führt, kann die Steifigkeit dieses Bereiches nicht beliebig verringert werden.

Zur Verminderung der Steifigkeit des Bereiches der Oberkante eines Kotflügels sind aus dem Stand der Technik bereits eine Vielzahl von Lösungen bekannt.

So ist es beispielsweise aus der DE 29 22 893 A1 bekannt, Fahrzeugpartien zur Verminderung der Verletzungsgefahr bei Personenunfällen energieabsorbierend auszubilden. In diesem Zusammenhang wird dort vorgeschlagen, eine Oberkante eines Kotflügels über ein Deformationselement in Form eines liegenden U-Profils gegen einen Fahrzeugaufbau abzustützen, wobei ein Schenkel mit der Oberkante, der andere Schenkel hingegen mit dem Fahrzeugaufbau verbunden ist. Dabei läuft der andere Schenkel in Fahrzeugquerrichtung aus und liegt auf einem Rahmenabschnitt des Fahrzeugaufbaus auf.

Bei einer weiteren, aus der DE 29 34 060 A1 bekannten, gemäss dem Oberbegriff des Anspruchs 1 Kotflügelanordnung, die ebenfalls ein liegendes U- Profil zur Abstützung der Oberkante gegen einen Fahrzeugaufbau verwendet, erfolgt die aufbauseitige Anbindung über einen sich im wesentlichen in Vertikalrichtung erstreckenden Abschnitt.

Weiterhin ist auch aus der DE 30 47 969 A1 bekannt, zwischen der Oberkante eines Kotflügels und dem Fahrzeugaufbau ein Deformationselement vorzusehen. Das Deformationselement ist hierbei als ein sich von der Oberkante zunächst im wesentlichen senkrecht nach unten, d.h. in bezug auf die Fahrzeugkarosserie zum Fahrzeugboden erstreckender Wandabschnitt des Kotflügels ausgebildet. An das Deformationselement schließen mehrere, voneinander beabstandete, profilierte Befestigungslappen an, über die die Anbindung an einen vertikalen Abschnitt des Fahrzeugaufbaus erfolgt.

Alternativ hierzu wird in der DE 44 01 023 C1 vorgeschlagen, anstelle von Deformationselementen eine Kipp- und Abrollmöglichkeit für den Kotflügel an dem Fahrzeugaufbau vorzusehen, wobei das Kippen bzw. Abrollen jedoch auch durch Deformationselemente gedämpft werden kann.

Schließlich ist aus der JP 11180350 eine Kotflügelanordnung bekannt, bei der die Abstützung gegen einen Fahrzeuglängsträger über ein Deformationselement mit einem kastenartigen Profil erfolgt. Das Deformationselement überragt hierbei den Längsträger nach außen, so daß bei einem Personenaufprall auf die Oberkante des Kotflügels der aufbauseitige Schenkel des Profils einknicken kann.

Diese bekannten Kotflügelanordnungen weisen jedoch immer noch eine verhältnismäßig hohe Steifigkeit im Bereich der Oberkante des Kotflügels auf.

Vor diesem Hintergrund besteht aus Gründen der Unfallsicherheit ein hohes Interesse daran, einen Kotflügel möglichst weich auszubilden, um bei Personenunfällen die Verletzungsgefahr weiter zu vermindern. Andererseits muß der Kotflügel eine ausreichende strukturelle Steifigkeit besitzen, um die Integrität der Fahrzeugaußenhaut im Betrieb zu wahren. Überdies dienen die Kotflügel auch der Aufnahme von Crashenergie bei einem Zusammenstoß mit einem schweren Hindernis, so daß deren Schwächung eine Verschlechterung der Insassensicherheit bedeuten würde.

Der Erfindung liegt daher die Aufgabe zugrunde, bei einem Personenaufprall eines Kraftfahrzeuges die Verletzungsgefahr bzw. die Schwere der Verletzungen zu vermindern.

Diese Aufgabe wird durch eine Kotflügelanordnung der eingangs genannten Art gelöst, bei der ein Abstützteil zwischen dem aufbauseitigen Schenkel des Deformationselementes und einem von der Oberkante beabstandeten Außenwandabschnitt des Kotflügels angeordnet ist, das den aufbauseitigen Schenkel und den Außenwandabschnitt gegeneinander abstützt.

Das Abstützteil gewährleistet die Integrität der Außenhaut des Kotflügels, so daß der Bereich zu der Oberkante hin mit einer höheren Nachgiebigkeit als bisher ausgebildet werden kann. Aus der hohen Nachgiebigkeit dieses Bereiches ergeben sich bei einem Personenaufprall gegenüber herkömmlichen Kotflügelanordnungen geringere Verzögerungswerte, womit das Verletzungsrisiko verringert wird. Die Kotflügelanordnung ist somit im Bereich der Oberkante sehr weich. In diesem Zusammenhang sei angemerkt, daß der Scheitel des C-Profils des Deformationselementes bis nahe an die Außenwand des Kotflügels geführt werden kann. Zwischen der Oberkante und dem Scheitel des C-Profils ergibt sich dann ein langer Hebelarm, der für eine große Nachgiebigkeit günstig ist. Das Abstützteil stellt sicher, daß der Kotflügel trotz seiner sehr weichen Anbindung an den Fahrzeugaufbau über das Deformationselement im Fahrbetrieb nicht zu unerwünschten Schwingungen oder Vibrationen neigt. Die Anbindung des Kotflügels über das Abstützteil gewährleistet überdies die weitgehende Ausnutzung des Verformungspotentials des Kotflügels zur Aufnahme von Crashenergie im Hinblick auf die Insassensicherheit, die bei einer alleinigen Anbindung des Kotflügels über ein sehr nachgiebiges Deformationselement nicht mehr gegeben wäre, da das Deformationselement vorzeitig zerstört werden würde. Zudem können Seitenkräfte sicher in den Kotflügel eingeleitet werden, beispielsweise in einer Waschanlage über die Waschbürsten oder beim Anschieben des Fahrzeuges, ohne diesen zu beschädigen.

Wie eingangs bereits erläutert, schlägt bei einem Zusammenstoß die Person in der zweiten Phase des Aufpralls im wesentlichen vertikal auf das Fahrzeug auf. In einer vorteilhaften Ausgestaltung der Erfindung ist das Abstützteil daher im wesentlichen quer zu der Abstützungsrichtung des Deformationselementes angeordnet, so daß dieses von dem aufbauseitigen Schenkel nach außen zu dem Außenwandabschnitt verläuft. Damit wird sichergestellt, daß bei Einwirkung einer Vertikalkraft auf die Oberkante des Kotflügels die Verformung derselben durch das Abstützteil nicht wesentlich eingeschränkt, sondern vielmehr durch das Deformationselement der Aufprall weich abgefangen wird.

Bevorzugt trifft das Abstützteil in Normalenrichtung auf den Außenwandabschnitt des Kotflügels. Dadurch wird eine für die Integrität der Kotflügelanordnung günstige Abstützung geschaffen, die ein Flattern des ansonsten weich angebundenen Kotflügels zuverlässig verhindert. Bei einer Vertikalbelastung der Oberkante des Kotflügels wirkt die Abstützstelle gewissermaßen als Schwenkgelenk. Eine feste Anbindung des Kotflügels in einem von der Oberkante beabstandeten Seitenbereich ist für die Nachgiebigkeit der Oberkante ohne größere Auswirkung, jedoch für die Ausnutzung des Verformungsvermögens des Kotflügels bei einer Kollision mit einem schweren Hindernis im Hinblick auf die Insassensicherheit günstig.

In diesem Zusammenhang ist es weiterhin vorteilhaft, wenn das außenwandseitige Ende des Abstützteils parallel zu dem Außenwandabschnitt umgebogen ist, um die Abstützfläche zu vergrößern.

In einer vorteilhaften Ausgestaltung der Erfindung ist das Ende des Abstützteils an der Innenwand des Außenwandabschnittes angeklebt. Dies erlaubt eine Anbindung des Abstützteils ohne eine Beeinträchtigung der optisch empfindlichen Außenhaut des Kotflügels. Beispielsweise können hier Stützkleber verwendet werden, wobei ein unmittelbarer Kontakt zwischen dem Abstützteil und der Innenwand vermieden ist, d. h. die Abstützung allein über den Stützkleber erfolgt.

Vorzugsweise läuft das Profil an dem kotflügelseitigen Schenkel im wesentlichen in Fahrzeugquerrichtung aus. Dadurch bleibt die Profilform einfach herstellbar und einfach montierbar. Überdies wird ein gutes Verformungsverhalten des Deformationselementes bei einem Personenaufprall erzielt.

Der Kotflügel kann mit dem Rand des kotflügelseitigen Schenkels verschweißt werden. Es ist auch möglich, den Kotflügel mit dem Rand des kotflügelseitigen Schenkels zu verfalzen. Diese Verbindungstechniken sind bei der Serienfertigung von Fahrzeugkarosserien üblicherweise verfügbar, so daß dort dann keine zusätzlichen Fertigungsmittel benötigt werden.

Auch der aufbauseitige Schenkel kann im Hinblick auf eine einfache Herstellung und Montage überwiegend in Fahrzeugquerrichtung verlaufend angeordnet werden und auf einem Rahmenabschnitt des Fahrzeugaufbaus aufliegen.

Zur Erleichterung des Austauschs eines Kotflügels, insbesondere eines beschädigten Kotflügels wird der aufbauseitige Schenkel bevorzugt lösbar an dem Fahrzeugaufbau befestigt.

In einer besonders vorteilhaften Ausgestaltung der Erfindung ist die Blechdicke des Deformationselementes kleiner als die Blechdicke des Kotflügels. Damit ergibt sich die Möglichkeit einer besonders nachgiebigen Ausbildung des Bereichs um die Oberkante des Kotflügels.

Für die Integrität der Außenhaut der Fahrzeugkarosserie ist es weiterhin vorteilhaft, wenn das Abstützteil eine größere Blechdicke aufweist als das Deformationselement.

Die Erfindung wird nachfolgend anhand von in der Zeichnung dargestellten Ausführungsbeispielen näher erläutert. Die Zeichnung zeigt in
- Figur 1: ein erstes Ausführungsbeispiel einer Kotflügelanordnung in einer Schnittdarstellung quer zur Fahrzeuglängsrichtung, und in
- Figur 2: ein zweites Ausführungsbeispiel einer Kotflügelanordnung in einer Schnittdarstellung quer zur Fahrzeuglängsrichtung.

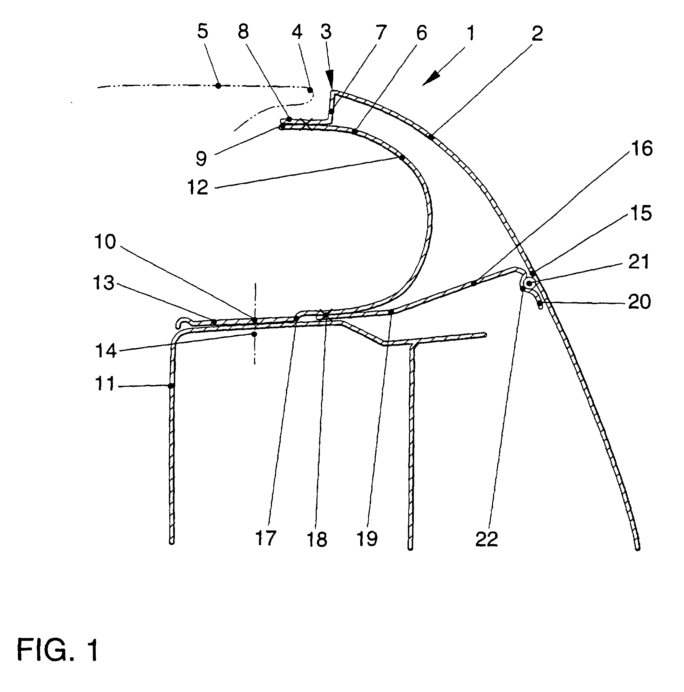

Das erste Ausführungsbeispiel in Figur 1 zeigt eine Kotflügelanordnung 1 für ein Personenkraftfahrzeug. Die Kotflügelanordnung 1 umfaßt zunächst einen Kotflügel 2, der als Blechformteil ausgebildet ist. An dem Kotflügel 2 ist eine Oberkante 3 ausgebildet, die entlang des Seitenrands 4 einer Fronthaube 5 des Kraftfahrzeuges im wesentlichen in Fahrzeuglängsrichtung verläuft. Die Oberkante 3 des Kotflügels 2 und der Seitenrand 4 der Fronthaube 5 bilden eine Trennfuge, die bei herkömmlichen Fahrzeugkarosserien bei Personenunfällen aufgrund der dort erhöhten strukturellen Steifigkeit einen Bereich erhöhter Verletzungsgefahr darstellt, da dort insbesondere die Oberkante 3 über einen verhältnismäßig steifen Wandabschnitt gegen einen Rahmenabschnitt des Fahrzeugaufbaus abgestützt ist.

Bei dem hier dargestellten Ausführungsbeispiel wird die Steifigkeit im Bereich der Trennfuge durch ein besonders weich ausbildbares Deformationselement 6 vermindert, gegen das sich der Kotflügel 2 im Bereich seiner Oberkante 3 abstützt. Dabei verläuft das Deformationselement 6 im wesentlichen entlang der Oberkante 3. Von der Oberkante 3 erstreckt sich ein Wandabschnitt 7 des Kotflügels 2 nach innen, der in einem im wesentlichen in Fahrzeugquerrichtung angeordneten Flanschabschnitt 8 ausläuft, so daß an dem Kotflügel 2 ein stufenförmiger Rand ausgebildet wird.

Die Anbindung an das Deformationselement 6 erfolgt über den Flanschabschnitt 8. Bevorzugt ist der Flanschabschnitt 8 mit dem Deformationselement 6 verschweißt. Es ist jedoch auch möglich, beide Teile durch Löten, Verkleben oder Verfalzen miteinander zu verbinden. Auch können der Flanschabschnitt 8 und das Deformationselement 6 miteinander vernietet oder lösbar miteinander verbunden, beispielsweise miteinander verschraubt werden.

Das Deformationselement 6 weist einen C-förmigen Profilquerschnitt auf, wobei ein Schenkel 9 des C-Profils im Bereich der Oberkante 3 von unten gegen den Flanschabschnitt 8 anliegt und der andere Schenkel 10 mit dem Fahrzeugaufbau 11 verbunden ist. Die beiden Schenkel 9 und 10 sind über einen kantenfreien Wandabschnitt 12 einstückig miteinander verbunden. Hier ist der Wandabschnitt 12 im Profil halbkreisförmig ausgebildet, wobei sich der Scheitel des Wandabschnittes 12 bis nahe an eine Außenwand des Kotflügels 2 heran erstreckt.

Wie Figur 1 weiter zu entnehmen ist, erstrecken sich beide Schenkel 9 und 10 im wesentlichen in Fahrzeugquerrichtung. Dabei ist der aufbauseitige Schenkel 10 länger ausgebildet als der kotflügelseitige Schenkel 9. Er läuft in einem über den kotflügelseitigen Schenkel 9 hinausstehenden Befestigungsabschnitt 13 aus, über den das Deformationselement 6 auf einem Rahmenabschnitt des Fahrzeugaufbaus 11 aufliegt.

Die Befestigung an dem Fahrzeugaufbau kann im Prinzip durch Schweißen, Löten, Verkleben oder Vernieten erfolgen. Im Hinblick auf eine einfache Austauschbarkeit des Kotflügels 2 ist hier jedoch das Deformationselement 6 über den Befestigungsabschnitt 13 mit dem Fahrzeugaufbau 11 über Schraubverbindungen 14 gekoppelt.

Weiterhin ist zwischen dem aufbauseitigen Schenkel 10 des Deformationselementes 6 und einem von der Oberkante 3 beabstandeten Außenwandabschnitt 15 des Kotflügels 2 ein Abstützteil 16 angeordnet, das den aufbauseitigen Schenkel 10 und den Außenwandabschnitt 15 gegeneinander abstützt. Das Abstützteil 16 ist dabei mit einem Ende außenseitig an dem aufbauseitigen Schenkel 10 befestigt, der hierzu gegenüber seinem Befestigungsabschnitt 13 einen Absatz 17 aufweist. Die Anbindung erfolgt in Fortsetzung der Auflageebene des Befestigungsabschnittes 13 an dem Fahrzeugaufbau 11, wobei das Abstützteil 16 an den Schenkel 10 angeschweißt ist. In Figur 1 ist die Schweißstelle mit dem Bezugszeichen 18 angedeutet.

Das Abstützteil 16 verläuft im wesentlichen quer zu der Abstützungsrichtung des Deformationselementes 6 von dem aufbauseitigen Schenkel 10 nach außen zu dem Außenwandabschnitt 15. Wie Figur 1 weiter zu entnehmen ist, trifft das Abstützteil 16 in Normalenrichtung auf den Außenwandabschnitt 15 des Kotflügels 2. Dazu weist das Abstützteil 16 einen zunächst den Befestigungsabschnitt 13 fortsetzenden Wandabschnitt 19 auf, um dann zu dem Außenwandabschnitt 15 nach schräg oben abzuknicken.

An seinem außenwandseitigen Ende ist das Abstützteil 16 nach unten umgebogen, um einen im wesentlichen parallel zu dem Außenwandabschnitt 15 verlaufenden Flanschabschnitt 20 auszubilden. Über diesen Flanschabschnitt 20 ist das Abstützteil 16 fest mit der Innenseite des Außenwandabschnittes 15 verbunden. Da der Außenwandabschnitt 15 einen Teil der Außenhaut des Fahrzeuges darstellt, sind hier Verbindungstechniken erforderlich, welche die Außenseite des Außenwandabschnittes 15 nicht beeinträchtigen. Bei dem hier dargestellten Ausführungsbeispiel ist daher das Ende des Abstützteils 16 an der Innenseite des Außenwandabschnittes 15 angeklebt. Hierzu ist zwischen dem Flanschabschnitt 20 und dem Außenwandabschnitt 15 ein Stützkleber 21 vorgesehen. Dieser Stützkleber 21 besitzt einen kreisförmigen Querschnitt und ist halbseitig in einer bogenförmigen Nut 22 an dem Flanschabschnitt 20 aufgenommen. Er besteht beispielsweise aus einem Epoxidharz. Die Abstützung der Innenseite des Kotflügels 2 an dem Abstützteil 16 erfolgt dabei vorzugsweise lediglich über den Stützkleber 21, so daß sich der Flanschabschnitt 20 und die Innenseite nicht direkt berühren.

Das Abstützteil 16 kann über die gesamte Längserstreckung des Deformationselementes 6 in Fahrzeuglängsrichtung vorgesehen werden. Vorzugsweise sind die Abstützteile 16 jedoch streifenweise ausgebildet, mehrfach vorhanden und in Fahrzeuglängsrichtung voneinander beabstandet angeordnet.

Wie der Kotflügel 2 so sind auch das Deformationselement 6 und das bzw. die Abstützteile 16 als Blechteile ausgebildet. Im Hinblick auf eine hohe Nachgiebigkeit weist das Deformationselement 6 eine kleinere Wanddicke auf, als der Kotflügel 2. Die Wanddicke des Deformationselementes 6 liegt im Bereich von 50 bis 80 % der Wanddicke des Kotflügels 2. Das Abstützteil 16 ist hingegen dicker als das Deformationselement 6 ausgebildet. Dabei kann die Wanddicke des Abstützteils 16 kleiner sein als die Wanddicke des Kotflügels 2.

In Abwandlung des zuvor beschriebenen Ausführungsbeispieles ist es möglich, den Befestigungsabschnitt 13 integral mit dem Abstützteil 16 auszubilden, wobei das Deformationselement 6 bzw. dessen aufbauseitige Schenkel 10 kürzer gestaltet werden kann. Der aufbauseitige Schenkel 10 setzt dann auf das Abstützteil 16 auf und ist an der Stelle 18 mit dem Abstützteil 16 verschweißt.

In einer weiteren Abwandlung bleibt der Befestigungsabschnitt 13 an dem Deformationselement 6. Jedoch wird das Abstützteil 16 nach innen soweit verlängert, daß dieses von der Schraubverbindung 14 miterfaßt wird. Damit kann eine Schweißverbindung zwischen dem Abstützteil 16 und dem Deformationselement 6 entfallen.

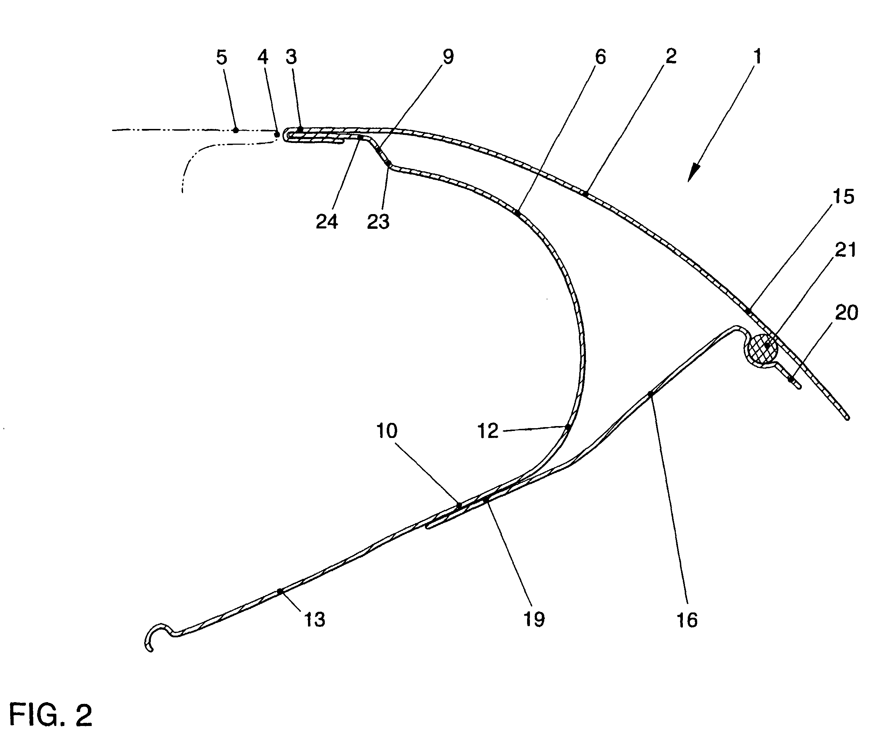

Ein weiteres Ausführungsbeispiel ist in Figur 2 dargestellt, wobei hier der Fahrzeugaufbau 11 nicht abgebildet ist. Die Kotflügelanordnung 1 nach Figur 2 entspricht im wesentlichen derjenigen des ersten Ausführungsbeispiels, so daß hier für gleichartige Elemente auch die gleichen Bezugszeichen verwendet werden und sich nähere Erläuterung zu diesen Elementen erübrigen.

Im Unterschied zu dem ersten Ausführungsbeispiel ist in Figur 2 das im Profil wieder C-förmige Deformationselement 6 mit einem etwas größeren Öffnungswinkel versehen, so daß der aufbauseitige Schenkel 10 und der Befestigungsabschnitt 13 etwas geneigt sind. Der aufbauseitige Schenkel 10 kann jedoch, insbesondere in seiner Winkellage, unschwer den Gegebenheiten an dem Fahrzeugaufbau angepaßt werden, solange ein großer Federweg bei einer Vertikalbelastung der Oberkante 3 des Kotflügels 2 gewährleistet ist.

Bei dem zweiten Ausführungsbeispiel bildet der kotflügelseitige Schenkel 9 eine Stufe 23 aus, an welche ein sich im wesentlichen in Fahrzeugquerrichtung erstreckender Randabschnitt 24 anschließt. Der Randabschnitt 24 ist der Kontur der Außenhaut der Fahrzeugkarosserie im Bereich der Oberkante 3 des Kotflügels 2 angepaßt und liegt innenseitig gegen diesen an. Zur Verbindung mit dem Randabschnitt 24 ist der Kotflügel 2 um den Randabschnitt 24 gefaltet und von der Innenseite gegen den Randabschnitt 24 gedrückt, um einen Falz auszubilden. Hierdurch ergibt sich eine besonders schmale Oberkante 3.

Die Wanddicken des Kotflügels 2, des Deformationselementes 6 und des Abstützteils 16 sind entsprechend dem ersten Ausführungsbeispiel gewählt, so daß sich auch bei dem zweiten Ausführungsbeispiel bei einer Vertikalbelastung eine hohe Nachgiebigkeit des Kotflügels 2 im Bereich zwischen der Oberkante 3 und dem Außenwandabschnitt 15, gegen den innenseitig das Abstützteil 16 über einen Stützkleber 21 angelehnt ist, ergibt.

In einer alternativen Ausführungsvariante ist es auch möglich, den Deformationsabschnitt 6 einstückig mit dem Kotflügel 2 auszubilden. Allerdings besitzen diese dann die gleiche Wanddicke. Durch die Erstreckung des Wandabschnittes 12 des Deformationsabschnittes 6 bis nahe an die Außenwand des Kotflügels 2 heran ergibt sich jedoch auch hier aufgrund des langen Hebelarms in bezug auf die Oberkante 3 bei einer Vertikalbelastung eine hohe Nachgiebigkeit.

### BEZUGSZEICHENLISTE

- 1: Kotflügelanordnung
- 2: Kotflügel
- 3: Oberkante des Kotflügels
- 4: Seitenrand
- 5: Fronthaube
- 6: Deformationselement
- 7: Wandabschnitt
- 8: Flanschabschnitt
- 9: kotflügelseitiger Schenkel
- 10: aufbauseitiger Schenkel
- 11: Fahrzeugaufbau
- 12: Wandabschnitt
- 13: Befestigungsabschnitt
- 14: Schraubverbindung
- 15: Außenwandabschnitt
- 16: Abstützteil
- 17: Absatz
- 18: Schweißstelle
- 19: fortsetzender Wandabschnitt
- 20: Flanschabschnitt
- 21: Stützkleber
- 22: Nut
- 23: Stufe
- 24: Randabschnitt

## Patentansprüche

1. Kotflügelanordnung für ein Kraftfahrzeug, umfassend einen Kotflügel (2) und ein Deformationselement (6) mit einem C-förmigen Profilquerschnitt zur im wesentlichen vertikal gerichteten Abstützung einer Oberkante (3) des Kotflügels (2) gegen einen Fahrzeugaufbau (11), wobei ein Schenkel (9) des C-Profils im Bereich der Oberkante (3) mit dem Kotflügel (2) und der andere Schenkel (10) mit dem Fahrzeugaufbau (11) verbunden ist, **dadurch gekennzeichnet, daß** ein Abstützteil (16) zwischen dem aufbauseitigen Schenkel (10) des Deformationselementes (6) und einem von der Oberkante (3) beabstandeten Außenwandabschnitt (15) des Kotflügels (2) angeordnet ist, das den aufbauseitigen Schenkel (10) und den Außenwandabschnitt (15) gegeneinander abstützt.

2. Kotflügelanordnung nach Anspruch 1, **dadurch gekennzeichnet, daß** das Abstützteil (16) im wesentlichen quer zu der Abstützungsrichtung des Deformationselementes (6) angeordnet ist und von dem aufbauseitigen Schenkel (10) nach außen zu dem Außenwandabschnitt (15) verläuft.

3. Kotflügelanordnung nach Anspruch 1 oder 2, **dadurch gekennzeichnet, daß** das Abstützteil (16) in Normalenrichtung auf den Außenwandabschnitt (15) des Kotflügels (2) trifft.

4. Kotflügelanordnung nach einem der Ansprüche 1 bis 3, **dadurch gekennzeichnet, daß** das Abstützteil (16) mit seinem außenwandseitigen Ende parallel zu dem Außenwandabschnitt (15) umgebogen ist.

5. Kotflügelanordnung nach einem der Ansprüche 1 bis 4, **dadurch gekennzeichnet, daß** das Abstützteil (16) mit seinem außenwandseitigen Ende an der Innenseite des Außenwandabschnittes (15) angeklebt ist.

6. Kotflügelanordnung nach einem der Ansprüche 1 bis 5, **dadurch gekennzeichnet, daß** das Profil des Deformationselementes (6) an dem kotflügelseitigen Schenkel (9) im wesentlichen in Fahrzeugquerrichtung ausläuft.

7. Kotflügelanordnung nach einem der Ansprüche 1 bis 6, **dadurch gekennzeichnet, daß** der Kotflügel (2) mit einem Randabschnitt des kotflügelseitigen Schenkels (9) verschweißt oder mit dem Randabschnitt (24) verfalzt ist.

8. Kotflügelanordnung nach einem der Ansprüche 1 bis 7, **dadurch gekennzeichnet, daß** der aufbauseitige Schenkel (10) überwiegend in Fahrzeugquerrichtung verlaufend angeordnet ist und auf einem Rahmenabschnitt des Fahrzeugaufbaus (11) aufliegt.

9. Kotflügelanordnung nach einem der Ansprüche 1 bis 8, **dadurch gekennzeichnet, daß** der aufbauseitige Schenkel (10) lösbar an dem Fahrzeugaufbau (11) befestigt ist.

10. Kotflügelanordnung nach einem der Ansprüche 1 bis 9, **dadurch gekennzeichnet, daß** die Blechdicke des Deformationselementes (6) kleiner ist als die Blechdicke des Kotflügels (2).

11. Kotflügelanordnung nach einem der Ansprüche 1 bis 10, **dadurch gekennzeichnet, daß** das Abstützteil (16) eine größere Blechdicke aufweist als das Deformationselement (6).

## Claims

1. Wing arrangement for a motor vehicle, comprising a wing (2) and a deformation element (6) having a C-shaped profile cross section for the essentially vertically directed support of an upper edge (3) of the wing (2) against a vehicle body (11), one limb (9) of the C-profile being connected in the region of the upper edge (3) to the wing (2) and the other limb (10) being connected to the vehicle body (11), **characterized in that** a support part (16) is arranged between the body-side limb (10) of the deformation element (6) and an outer wall section (15) of the wing (2), said section being spaced apart from the upper edge (3), which support part supports the body-side limb (10) and the outer wall section (15) against each other.

2. Wing arrangement according to Claim 1, **characterized in that** the support part (16) is arranged essentially transversely with respect to the supporting direction of the deformation element (6) and runs outwards from the body-side limb (10) to the outer wall section (15).

3. Wing arrangement according to Claim 1 or 2, **characterized in that** the support part (16) runs against the outer wall section (15) of the wing (2) in the normal direction.

4. Wing arrangement according to one of Claims 1 to 3, **characterized in that** the support part (16) is, at its end on the outer wall side, bent over parallel to the outer wall section (15).

5. Wing arrangement according to one of Claims 1 to 4, **characterized in that** the support part (16) is, at its end on the outer wall side, bonded to the inside of the outer wall section (15).

6. Wing arrangement according to one of Claims 1 to 5, **characterized in that** the profile of the deformation element (6) peters out essentially in the transverse direction of the vehicle at the wing-side limb (9).

7. Wing arrangement according to one of Claims 1 to 6, **characterized in that** the wing (2) is welded to an edge section of the wing-side limb (9) or is folded together with the edge section (24).

8. Wing arrangement according to one of Claims 1 to 7, **characterized in that** the body-side limb (10) is arranged in a manner such that it runs predominantly in the transverse direction of the vehicle and rests on a frame section of the vehicle body (11).

9. Wing arrangement according to one of Claims 1 to 8, **characterized in that** the body-side limb (10) is fastened releasably to the vehicle body (11).

10. Wing arrangement according to one of Claims 1 to 9, **characterized in that** the sheet-metal thickness of the deformation element (6) is smaller than the sheet-metal thickness of the wing (2).

11. Wing arrangement according to one of Claims 1 to 10, **characterized in that** the support part (16) has a greater sheet-metal thickness than the deformation element (6).

## Revendications

1. Agencement de garde-boue pour un véhicule automobile, comprenant un garde-boue (2) et un élément de déformation (6) de section transversale avec un profil en forme de C en vue du support orienté essentiellement verticalement d'une arête supérieur (3) du garde-boue (2) contre une carrosserie du véhicule (11), une branche (9) du profil en C étant connectée dans la région de l'arête supérieure (3) au garde-boue (2) et l'autre branche (10) étant connectée à la carrosserie du véhicule (11), **caractérisé en ce qu**'une partie de support (16) est disposée entre la branche (10) de l'élément de déformation (6) du côté de la carrosserie et une portion de paroi extérieure (15) du garde-boue (2) espacée de l'arête supérieure (3), laquelle partie de support supporte la branche (10) du côté de la carrosserie et la portion de paroi extérieure (15) l'une contre l'autre.

2. Agencement de garde-boue selon la revendication 1, **caractérisé en ce que** la partie de support (16) est disposée essentiellement transversalement à la direction de support de l'élément de déformation (6) et s'étend depuis la branche (10) du côté de la carrosserie vers l'extérieur vers la portion de paroi extérieure (15).

3. Agencement de garde-boue selon la revendication 1 ou 2, **caractérisé en ce que** la partie de support (16) tombe dans la direction normale sur la portion de paroi extérieure (15) du garde-boue (2).

4. Agencement de garde-boue selon l'une quelconque des revendications 1 à 3, **caractérisé en ce que** la partie de support (16) est recourbée avec son extrémité du côté de la paroi extérieure parallèlement à la portion de paroi extérieure (15).

5. Agencement de garde-boue selon l'une quelconque des revendications 1 à 4, **caractérisé en ce que** la partie de support (16) est collée avec son extrémité du côté de la paroi extérieure au côté intérieur de la portion de paroi extérieure (15).

6. Agencement de garde-boue selon l'une quelconque des revendications 1 à 5, **caractérisé en ce que** le profil de l'élément de déformation (6) sur la branche (9) du côté du garde-boue se termine essentiellement dans la direction transversale du véhicule.

7. Agencement de garde-boue selon l'une quelconque des revendications 1 à 6, **caractérisé en ce que** le garde-boue (2) est soudé avec une portion de bord de la branche (9) du côté du garde-boue ou est emboîté avec la portion de bord (24).

8. Agencement de garde-boue selon l'une quelconque des revendications 1 à 7, **caractérisé en ce que** la branche du côté de la carrosserie (10) est disposée de manière s'étendant essentiellement dans la direction transversale du véhicule et repose sur une portion de cadre de la carrosserie du véhicule (11).

9. Agencement de garde-boue selon l'une quelconque des revendications 1 à 8, **caractérisé en ce que** la branche du côté de la carrosserie (10) est fixée de manière détachable sur la carrosserie du véhicule (11).

10. Agencement de garde-boue selon l'une quelconque des revendications 1 à 9, **caractérisé en ce que** l'épaisseur de tôle de l'élément de déformation (6) est inférieure à l'épaisseur de tôle du garde-boue (2).

11. Agencement de garde-boue selon l'une quelconque des revendications 1 à 10, **caractérisé en ce que** la partie de support (16) présente une épaisseur de tôle plus importante que l'élément de déformation (6).
